# EUROPEAN PATENT APPLICATION

(11) **EP 4 047 317 A2**
(43) Date of publication of application: **24.08.2022**
(21) Application number: 22183752.9
(22) Date of filing: 08.07.2022
(51) Int. Cl.: G01C 21/32

(54) **MAP UPDATING METHOD AND APPARATUS, DEVICE, SERVER, AND STORAGE MEDIUM**

(30) Priority: 13.07.2021 CN 202110792157
(71) Applicant: BEIJING BAIDU NETCOM SCIENCE TECHNOLOGY CO., LTD., No. 10 Shangdi 10th Street Haidian District Beijing 100085 (CN)
(72) Inventor: LIU, Qisheng, Beijing, 100085 (CN); ZENG, Qingyu, Beijing, 100085 (CN); LI, Youhao, Beijing, 100085 (CN); LUO, Cheng, Beijing, 100085 (CN)
(74) Representative: J A Kemp LLP

(57) **Abstract**

Embodiments of the present disclosure provide a map updating method and apparatus, a device, a server, and a storage medium, which relate to the field of artificial intelligence, and in particular, to the field of autonomous parking. The specific implementation solution is: an intelligent vehicle obtains driving data collected by a vehicle sensor of its own vehicle on a target road section, where the driving data at least includes first video data related to an environment of the target road section, and determines at least one image feature corresponding to each first image frame in the first video data, where the image feature at least includes an image local feature related to the environment of the target road section, and then updates map data corresponding to the target road section according to the at least one image feature corresponding to each first image frame in the first video data. The present disclosure realizes automatic map updating, enriches map data and improves reliability of a map.

## Description

### TECHNICAL FIELD

Embodiments of the present disclosure relate to the field of autonomous parking in artificial intelligence, and in particular, to a map updating method and apparatus, a device, a sever, and a storage medium.

### BACKGROUND

When a vehicle with an autonomous driving function performs autonomous parking, the vehicle calculates the position and posture of the vehicle in real time according to map data of a parking lot constructed in advance, and then controls the vehicle itself to drive into or out of a parking space. However, the environment of the parking lot will change over time or with changes of illumination, which will reduce the reliability of the map data of the parking lot constructed in advance. In that case, if the vehicle is still parked autonomously based on the map data, it will be difficult for the vehicle to complete the parking operation, which will bring great hidden dangers to driving safety.

### SUMMARY

Embodiments of the present disclosure provide a map updating method and apparatus, a device, and a storage medium.

According to a first aspect of the present disclosure, there is provided a map updating method applied to an intelligent vehicle or a control device connected to an intelligent vehicle, where the intelligent vehicle is provided with a vehicle sensor, the method including: obtaining driving data collected by the vehicle sensor on a target road section, where the driving data at least includes first video data related to an environment of the target road section; determining at least one image feature corresponding to each first image frame in the first video data, where the image feature at least includes an image local feature related to the environment of the target road section; and updating map data corresponding to the target road section according to the at least one image feature corresponding to each first image frame in the first video data.

According to a second aspect of the present disclosure, there is provided a map updating method applied to a first server, the method including: obtaining driving data collected by an intelligent vehicle on a target road section, where the driving data at least includes first video data; determining at least one image feature corresponding to each first image frame in the first video data, where the image feature at least includes an image local feature; and updating map data corresponding to the target road section according to the at least one image feature corresponding to each first image frame in the first video data.

According to a third aspect of the present disclosure, there is provided a map updating apparatus, including: an obtaining unit, configured to obtain driving data collected by a vehicle sensor on a target road section, where the driving data at least includes first video data related to an environment of the target road section; a first feature-extracting unit, configured to determine at least one image feature corresponding to each first image frame in the first video data, where the image feature at least includes an image local feature related to the environment of the target road section; and an updating unit, configured to update map data corresponding to the target road section according to the at least one image feature corresponding to each first image frame in the first video data.

According to a fourth aspect of the present disclosure, there is provided a map updating apparatus, including: an obtaining unit, configured to obtain driving data collected by an intelligent vehicle on a target road section, where the driving data at least includes first video data; a first feature-extracting unit, configured to determine at least one image feature corresponding to each first image frame in the first video data, where the image feature at least includes an image local feature; and an updating unit, configured to update map data corresponding to the target road section according to the at least one image feature corresponding to each first image frame in the first video data.

According to a fifth aspect of the present disclosure, there is provided an electronic device, including: at least one processor; and a memory, communicatively connected with the at least one processor; where the memory stores instructions executable by the at least one processor, and the instructions are executed by the at least one processor to enable the at least one processor to execute the method provided by the first aspect.

According to a sixth aspect of the present disclosure, there is provided a server, including: at least one processor; and a memory, communicatively connected with the at least one processor; where the memory stores instructions executable by the at least one processor, and the instructions are executed by the at least one processor to enable the at least one processor to execute the method provided by the second aspect.

According to a seventh aspect of the present disclosure, there is provided a non-transitory computer readable storage medium storing computer instructions, where the computer instructions are used to cause a computer to execute the method provided according to the first aspect.

According to an eighth aspect of the present disclosure, there is provided a non-transitory computer readable storage medium storing computer instructions, where the computer instructions are used to cause a computer to execute the method provided according to the second aspect.

According to a ninth aspect of the present disclosure, there is provided a computer program product, which includes a computer program stored in a readable storage medium, at least one processor of an electronic device may read the computer program from the readable storage medium, and the at least one processor executes the computer program to cause the electronic device to execute the method of the first aspect.

According to a tenth aspect of the present disclosure, there is provided a computer program product, which includes a computer program stored in a readable storage medium, at least one processor of an electronic device may read the computer program from the readable storage medium, and the at least one processor executes the computer program to cause the electronic device to execute the method of the second aspect.

The technology according to the present disclosure realizes automatic map updating, enriches map data and improves reliability of a map.

It should be understood that what is described in this section is not intended to identify key or critical features of embodiments of the present disclosure, nor is it used to limit the scope of the present disclosure. Other features of the present disclosure will be easily understood by the following specification.

### BRIEF DESCRIPTION OF DRAWINGS

The accompanying drawings are used to better understand the present solution and do not constitute a limitation of the present disclosure, where
FIG. 1 is a schematic structural diagram of a map updating system 100 provided by an embodiment of the present disclosure;
FIG. 2 is a schematic flowchart of a map updating method 200 provided by an embodiment of the present disclosure;
FIG. 3 is a schematic flowchart of another map updating method provided by an embodiment of the present disclosure;
FIG. 4 is a schematic flowchart of another map updating method provided by an embodiment of the present disclosure;
FIG. 5 is a schematic flowchart of another map updating method provided by an embodiment of the present disclosure;
FIG. 6 is a schematic flowchart of another map updating method provided by an embodiment of the present disclosure;
FIG. 7 is a schematic flowchart of another map updating method provided by an embodiment of the present disclosure;
FIG. 8 is a schematic flowchart of another map updating method provided by an embodiment of the present disclosure;
FIG. 9 is a schematic flowchart of another map updating method provided by an embodiment of the present disclosure;
FIG. 10 is a schematic flowchart of another map updating method provided by an embodiment of the present disclosure;
FIG. 11 is a schematic flowchart of another map updating method provided by an embodiment of the present disclosure;
FIG. 12 is a schematic interactive flowchart of a map updating method 300 provided by an embodiment of the present disclosure;
FIG. 13 is a schematic interactive flowchart of a map updating method 400 provided by an embodiment of the present disclosure;
FIG. 14 is a schematic interactive flowchart of another map updating method provided by an embodiment of the present disclosure;
FIG. 15 is a schematic interactive flowchart of another map updating method provided by an embodiment of the present disclosure;
FIG. 16 is a schematic interactive flowchart of a map updating method 500 provided by an embodiment of the present disclosure;
FIG. 17 is a schematic block diagram of a map updating apparatus 600 provided by an embodiment of the present disclosure;
FIG. 18 is a schematic block diagram of another map updating apparatus provided by an embodiment of the present disclosure;
FIG. 19 is a schematic block diagram of a map updating apparatus 700 provided by an embodiment of the present disclosure;
FIG. 20 is a schematic block diagram of another map updating apparatus provided by an embodiment of the present disclosure;
FIG. 21 shows a schematic block diagram of an example electronic device 800 which may be used to implement embodiments of the present disclosure; and
FIG. 22 shows a schematic block diagram of an example server 900 which may be used to implement embodiments of the present disclosure.

### DESCRIPTION OF EMBODIMENTS

Exemplary embodiments of the present disclosure are described below with reference to the accompanying drawings, which include various details of the embodiments of the present disclosure to facilitate understanding and should be considered as exemplary only. Accordingly, those of ordinary skill in the art should recognize that various changes and modifications may be made to the embodiments described herein without departing from the scope of the present disclosure. Similarly, description of well-known functions and structures is omitted from the following description for clarity and conciseness.

The map updating method provided by embodiments of the present disclosure may be applied to any field where a map needs to be automatically updated, and is especially suitable for the field of autonomous parking of intelligent vehicles.

An executive subject of the present disclosure may be an intelligent vehicle, which may be a vehicle with an autonomous driving function. The intelligent vehicle provided by embodiments of the present disclosure may utilize various types of sensors, a map database, a global positioning system (GPS), etc., to realize autonomous driving of a vehicle. The present disclosure does not limit the shape of the intelligent vehicle, that is, any movable device with an autonomous driving function also belongs to the protection scope of the present disclosure.

An executive subject of the present disclosure may be an electronic device connected to an intelligent vehicle, and executive methods related to the intelligent vehicle mentioned in the present disclosure may all be executed by the electronic device connected to the intelligent vehicle. The electronic device may be a control unit deployed in an intelligent vehicle, or may be any terminals which are connected to an intelligent vehicle and which can perform information interaction with the intelligent vehicle, such as a mobile phone, a computer, a tablet. Intelligent vehicles presenting hereinafter may all refer to an intelligent vehicle itself or an electronic device connected to an intelligent vehicle for the convenience of description.

In some embodiments, an executive subject of the present disclosure may include the above intelligent vehicle and a server, and when the executive subjects are the intelligent vehicle and the server, the intelligent vehicle and the server are connected and interact with each other in a wired or wireless manner.

Intelligent vehicles are more and more popular since they often provide a more convenient driving experience. When an intelligent vehicle needs to park autonomously, the intelligent vehicle needs to calculates a position and posture of its own vehicle in real time and controls its own vehicle to drive into or out of a parking space according to the position and posture and map data of a parking lot constructed in advance. However, the environment of the parking lot will change slowly over time. For example, trees around the parking lot have only branches in winter, and bloom and come into leaves in spring; for another example, light is strong during the day and weak during the night, or the environment of the parking lot will also change with illumination, for example, good illumination in sunny days and poor illumination in cloudy days, etc. In a case that the environment of the parking lot is prone to change, the constructed map data cannot cover characteristics of various scenes due to a small amount of data, resulting in low reliability of the map data, which makes it difficult for the vehicle to complete the parking operation, and brings great hidden danger to driving safety.

In view of the above technical problems, embodiments of the present disclosure provide a map updating method, where video data related to environment is collected through a vehicle sensor of an intelligent vehicle, an image local feature of each image frame in video data is extracted, and map data is updated based on the image local feature of each image frame, which realizes automatic map updating, enriches map data and improves reliability of a map.

It should be noted that the map updating method provided by the present disclosure is not limited to use in updating the map data of a parking lot, but also applicable to updating the map data of any road, country road, racing circuit, etc.

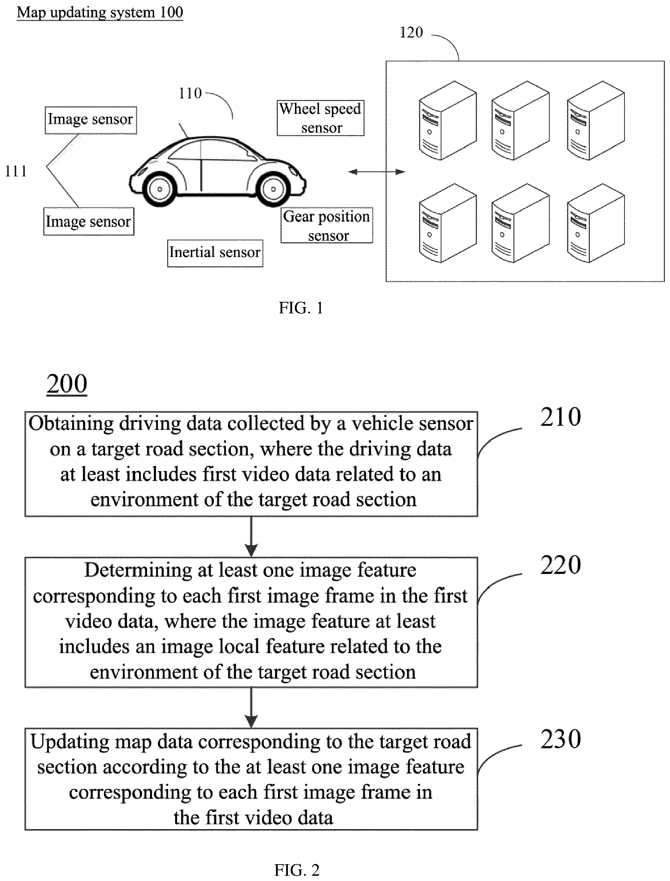

FIG. 1 is a schematic structural diagram of a map updating system 100 provided by an embodiment of the present disclosure. Embodiments of the present disclosure may be applied to the map updating system 100 shown in FIG. 1, where the system 100 includes at least an intelligent vehicle 110.

The intelligent vehicle 110 is deployed with various vehicle sensors. The vehicle sensors include at least an image sensor 111, and the number of the image sensor 111 is not limited in the embodiments of the present disclosure. When there are multiple image sensors 111, the embodiments of the present disclosure distinguish different image sensors 111 by first, second, and various numerical numbers for convenience of description.

In some embodiments, the vehicle sensors also include any one or more of a wheel speed sensor, an inertial sensor, a gear position sensor, and the like.

In some embodiments, the system 100 further includes a serving end 120. The serving end 120 is connected to the intelligent vehicle 110 in a wired or wireless manner.

The serving end 120 may be a server or a server cluster. In some embodiments, a server in the serving end 120 may be a cloud server, also referred to as a cloud-based server.

In some embodiments, the serving end 120 may include a cloud storage server cluster and a cloud computing server cluster.

The cloud computing server cluster is used to provide a cloud computing service. Cloud computing, as a computing mode, is to distribute computing tasks in a resource pool composed of a large number of computers, so that various application systems may obtain computing power, storage space and information services according to their needs.

The cloud storage server cluster is used to provide cloud storage services. Cloud storage is a storage system which extends and develops from a concept of cloud computing and which integrates a large number of different types of storage devices (also called storage nodes) in a network through application software or application interfaces to operate collaboratively to jointly provide data storage and business access functions to the outside. The cloud storage server cluster in embodiments of the present disclosure may be a cloud object storage server cluster.

Embodiments of the present disclosure distinguish different servers and server clusters by first, second, and various numerical numbers for convenience of description.

Technical solutions of the present application will be described in detail below through specific embodiments.

FIG. 2 is a schematic flowchart of a map updating method 200 provided by an embodiment of the present disclosure. An executive subject of the embodiment of the present disclosure may be the intelligent vehicle 110 in the above embodiment. As illustrated in FIG. 2, the method 200 includes:
S210: obtaining driving data collected by a vehicle sensor on a target road section, where the driving data at least includes first video data related to an environment of the target road section;
S220: determining at least one image feature corresponding to each first image frame in the first video data, where the image feature at least includes an image local feature related to the environment of the target road section; and
S230: updating map data corresponding to the target road section according to the at least one image feature corresponding to each first image frame in the first video data.

The target road section in the embodiment of the present disclosure is a road section for which a map has been constructed, and for example, it may be any one or more road sections in a parking lot. It can be understood that an object of the map updating in the embodiment of the present disclosure is the map data corresponding to the target road section.

For S210, it should be noted that:
when the intelligent vehicle drives through the target road section, data collection may be performed through the vehicle sensor to obtain the driving data. In the embodiment of the present disclosure, the driving data at least includes the first video data, that is, the vehicle sensor at least includes an image sensor. It should be understood that the image sensor may be a camera installed on the intelligent vehicle for collecting images and/or videos of the environment of the target road section.

For S220, it should be noted that:
the first video data includes a plurality of image frames, where the first image frame may be all image frames constituting the first video data or a portion of all the image frames constituting the first video data. When the first image frame is a portion of all the image frames constituting the first video data, first image frames may be image frames with the same interval among all the image frames of the first video data, for example, the 1st, 10th, 20th, 30th ...... image frames among all the image frames of the first video data are set as the first image frames.

In S220, the intelligent vehicle may extract an image feature from each first image frame to obtain at least one image feature corresponding to each first image frame.

In an embodiment of the present disclosure, the image feature at least includes an image local feature. As an example, for each first image frame in the first video data, the intelligent vehicle performs a scale-invariant feature transform (SIFT) on the first image frame to obtain at least one image local feature corresponding to the first image frame, where the image local feature may also be called a SIFT feature. As another example, the intelligent vehicle may input the first video data or each first image frame in the first video data into a feature extracting model obtained by pre-training, and obtain an image local feature output by the feature extraction model, such as a superpoint, where the feature extracting model is obtained by training based on a deep learning model.

In some embodiments, the intelligent vehicle may also extract at least one image semantic feature from each first image frame. For ease of understanding, taking an autonomous parking scene as an example, the image semantic feature may be a lane line, a parking space line, a lane driving direction identifier, an indication lamp for a free parking space, and the like.

For S230, description is given as follows:
illustratively, the intelligent vehicle updates the at least one image feature corresponding to each first image frame in the first video data into the map data; or, the intelligent vehicle determines whether to update the map data according to the at least one image feature corresponding to each first image frame in the first video data, and in a case that it is determined to update the map data, updates the map data according to the at least one image feature corresponding to each first image frame.

In an embodiment of the present disclosure, the map data may be map data based on visual point cloud features. Illustratively, the map data includes a plurality of map points, each of which may be one of the following two types: 1. map points in a three-dimensional point cloud obtained by three-dimensional reconstruction based on image local feature points, where the map points include three-dimensional coordinates and visual feature descriptors, such as SIFT features and SuperPoint features; 2. map points obtained by three-dimensional reconstruction based on semantic features, where the map points include three-dimensional coordinates.

The embodiment of the present disclosure provides a map updating method applied to fields such as autonomous driving and autonomous parking in the field of artificial intelligence, where driving data of a target road section is collected through a vehicle sensor, and at least one image feature corresponding to each first image frame in the first video data related to the environment of the target road section in the driving data is determined, and then the map data corresponding to the target road section is updated based on at least one image feature related to the environment of the target road section corresponding to each first image frame to realize automatic map updating, enrich map data and improve reliability of the map.

In some embodiments, the first video data is video data of a front of the vehicle collected by a first image sensor in the vehicle sensors of the intelligent vehicle, that is, each first image frame in the first video data is a forward-view image of the intelligent vehicle. Optionally, the first image sensor may be installed in front of the intelligent vehicle.

In some embodiments, the driving data also includes second video data. In this case, the intelligent vehicle may perform feature extraction based on each first image frame in the first video data to obtain at least one image local feature corresponding to each first image frame, and perform semantic recognition based on m pieces of second video data (where m is greater than or equal to 1) and/or the first video data to obtain at least one image semantic feature corresponding to each first image frame.

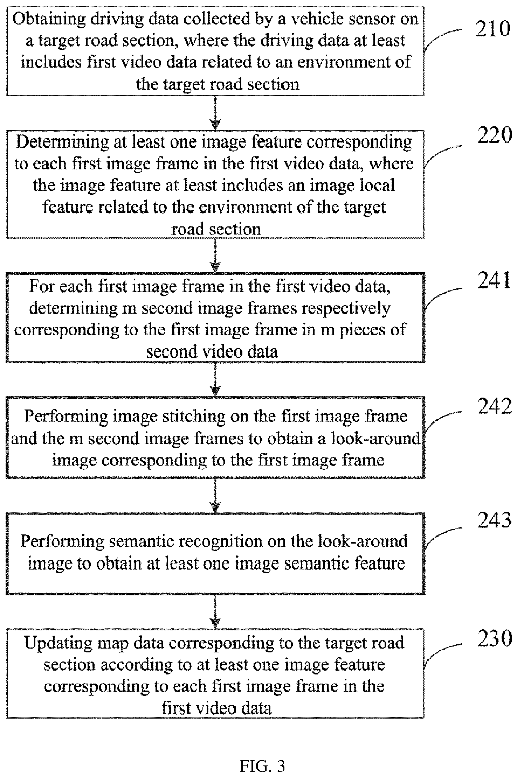

In the process of the intelligent vehicle performing semantic recognition based on the m pieces of second video data and/or the first video data, m second image frames corresponding to each first image frame in the first video data may be determined in the m pieces of second video data. Illustratively, when m is equal to 1, the intelligent vehicle performs semantic recognition on the m second image frames to obtain at least one image semantic feature, and when m is greater than 1, the intelligent vehicle performs image stitching on the m second image frames and then performs semantic recognition on the stitched image to obtain at least one image semantic feature. For a case where m is greater than 1, embodiments of the present application are described in conjunction with an example as shown in FIG. 3 below.

It should be noted that the second video data and the first video data are video data from different visual angles.

The following description will be given by taking the example shown in FIG. 3.

FIG. 3 is a schematic flowchart of another map updating method provided by an embodiment of the present disclosure. As shown in FIG. 3, on the basis of the embodiment shown in FIG. 2, the method further includes:
S241: for each first image frame in the first video data, determining m second image frames respectively corresponding to the first image frame in m pieces of second video data;
S242: performing image stitching on the first image frame and the m second image frames to obtain a look-around image corresponding to the first image frame;
S243: performing semantic recognition on the look-around image to obtain at least one image semantic feature.

It should be noted that this embodiment does not limit the execution order of S241 to S243 and the above S220. Generally speaking, S241 to S243 should be executed before the above S230.

Illustratively, the second video data is video data of a front, a side or a rear of the vehicle collected by a second image sensor of the intelligent vehicle, that is, each second image frame in the second video data is a frontward view image, a leftward or rightward view image or a rearward view image of the intelligent vehicle. Optionally, the vehicle sensor includes at least one second image sensor, where each second image sensor may collect images of the front, the left or right side or the rear of the vehicle, and each second image sensor may collect a piece of second video data. In some embodiments, a second image sensor may be installed on the front side, the left and right sides and the rear side of the intelligent vehicle, respectively.

Alternatively, at least one second sensor may be a fisheye camera for collecting a top view image around the vehicle body.

In S241, it should be noted that the first image frame and a second image frame of each second video data in the m pieces of second video data should have a corresponding relationship in the time domain. For example, the first image frame and a certain second image frame in the second video data have the same time, that is, the first image frame and the second image frame in the second video data are collected at the same time, then the first image frame and the second image frame have a corresponding relationship.

In S242, the intelligent vehicle performs image stitching on the m second image frames to obtain a look-around image corresponding to the first image frame.

In S243, the intelligent vehicle may perform semantic recognition on the above look-around image based on any semantic recognition algorithm to obtain a semantic feature of at least one image corresponding to the first image frame.

In this embodiment, the intelligent vehicle determines at least one image semantic feature according to the first image frame in the first video data and a second image frame corresponding to the first image frame in each piece of second video data of the m pieces of second video data, and updates the map data of the target road section according to at least one image semantic feature and at least one image local feature corresponding to each first image frame, and thus richer map data can be obtained to make the map data more reliable.

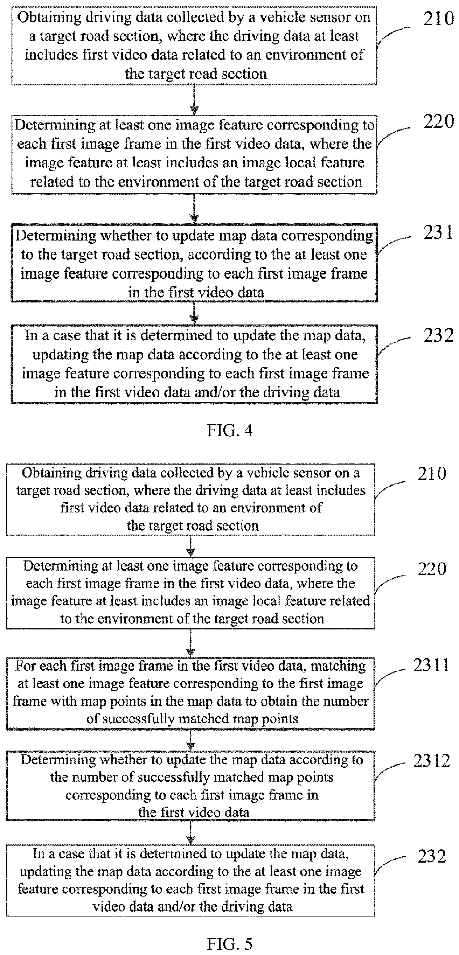

In some embodiments, in order to reduce system costs, the intelligent vehicle may evaluate whether the map data needs to be updated before updating the map data. This embodiment may be combined with any of the above embodiments shown in FIG. 2 or FIG. 3, and is described below in conjunction with the embodiment shown in FIG. 2, referring to FIG. 4.

FIG. 4 is a schematic flowchart of another map updating method provided by an embodiment of the present disclosure. As illustrated in FIG. 4, the method also includes:
S231: determining whether to update the map data corresponding to the target road section, according to the at least one image feature corresponding to each first image frame in the first video data;
S232: in a case that it is determined to update the map data, updating the map data according to the at least one image feature corresponding to each first image frame in the first video data and/or the driving data.

Illustratively, the at least one image feature corresponding to each first image frame in S231 may be an image local feature, or an image semantic feature, or both the image local feature and the image semantic feature.

For S231, illustratively, the intelligent vehicle may determine whether to update the map data, according to a matching result of the at least one image feature corresponding to each first image frame in the first video data and the map data; or the intelligent vehicle may determine whether to update the map data according to a total amount of image features composed of the at least one image feature corresponding to each first image frame in the first video data.

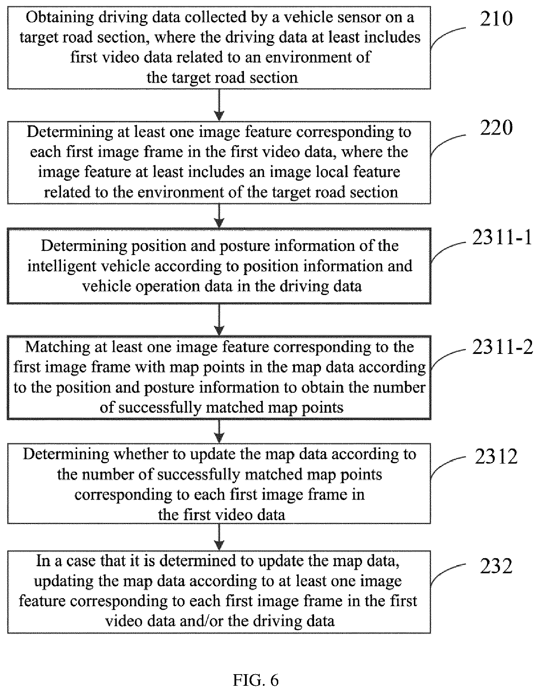

For S232, illustratively, the intelligent vehicle may update the map data by using position-related operation data in driving data and at least one image frame corresponding to each first image frame. For example, reference may be made to an implementation method shown in FIG. 6 below.

For S232, illustratively, when it is determined to update the map data, the intelligent vehicle may send the driving data to a server so that the server updates the map data based on the driving data, and the intelligent vehicle may receive the updated map data sent by the server.

Illustratively, if the intelligent vehicle determines not to update the map data, the collected driving data may be discarded.

On the basis of the embodiment shown in FIG. 4, as a possible implementation manner, the embodiment shown in FIG. 5 below provides an illustrative description of how to determine whether to update the map data corresponding to the target road section according to at least one image feature corresponding to each first image frame in the first video data.

FIG. 5 is a schematic flowchart of another map updating method provided by an embodiment of the present disclosure. As illustrated in FIG. 5, the above S231 includes:
S2311: for each first image frame in the first video data, matching at least one image feature corresponding to the first image frame with map points in the map data to obtain the number of successfully matched map points; and
S2312: determining whether to update the map data, according to the number of successfully matched map points corresponding to each first image frame in the first video data.

Illustratively, in S2311, for each image feature in the at least one image feature corresponding to each first image frame and according to a type of the image feature, the intelligent vehicle performs matching with map points of the corresponding type in the map data, for example, an image local feature is matched with map points in a 3-dimensional point cloud obtained by performing 3-dimensional reconstruction based on image local features in the map data, or an image semantic feature is matched with map points obtained by performing 3-dimensional reconstruction based on semantic features.

Illustratively, in S2312, the intelligent vehicle may obtain the total number of successfully matched map points corresponding to the first video data according to the number of successfully matched map points corresponding to each first image frame in the first video data, and when the total number is less than a first value, it is determined to update the map data; or the intelligent vehicle may determine whether there is an image frame in the first video data where the image frame corresponds to a number of successfully matched map points less than a second value, and when there is an image corresponding to a number less than the second value, it is determined to update the map data.

FIG. 6 is a schematic flowchart of another map updating method provided by an embodiment of the present disclosure. As shown in FIG. 6, the above S2311 includes:
S2311-1: determining position and posture information of the intelligent vehicle corresponding to each first image frame in the first video data according to position information and the position-related operation data in the driving data;
S2311-2: matching at least one image feature corresponding to the first image frame with map points in the map data according to the position and posture information to obtain the number of successfully matched map points.

Optionally, the operation data includes at least one of wheel speed, acceleration, angular velocity and gear position.

Illustratively, the wheel speed may be collected by a wheel speed sensor of the intelligent vehicle, the acceleration and angular velocity may be collected by an inertial sensor of the intelligent vehicle, and the gear position may be collected by a gear position sensor of the intelligent vehicle.

Illustratively, in S2311-1, the intelligent vehicle may determine its own position and posture information according to at least one of the above operation data, for example, the intelligent vehicle may determine its own position and posture information according to the position information, the acceleration and the angular velocity.

In some embodiments, the position and posture information of the intelligent vehicle may be determined by considering the position information of the intelligent vehicle obtained by a GPS system.

It should be noted that each first image frame corresponds to one piece of position and posture information of the intelligent vehicle, and there may be one or more first image frames corresponding to the same position and posture of the intelligent vehicle. For example, when the driving speed of the intelligent vehicle is less than a collection frequency of the first image frame, the same position and posture of the intelligent vehicle may correspond to a plurality of first image frames, and when the driving speed of the intelligent vehicle is greater than or equal to the collection frequency of the first image frame, the same position and posture of the intelligent vehicle only corresponds to one first image frame.

The intelligent vehicle can determine a relative motion relationship between the first image frame and the map data according to its own position and posture information , and then match the at least one image feature with a map point in the map data.

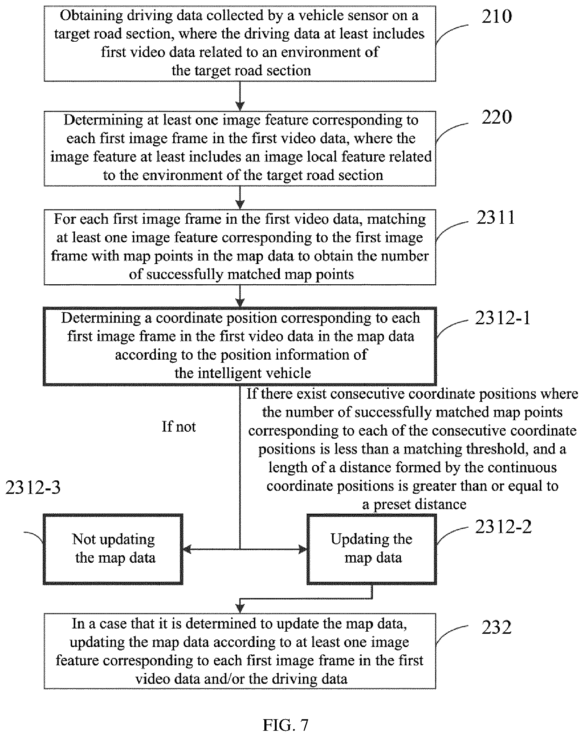

The map updating method provided in an embodiment may be implemented based on the embodiments shown in FIG. 5 or FIG. 6, and is described below by taking FIG. 5 as an example, referring to FIG. 7.

FIG. 7 is a schematic flowchart of another map updating method provided by an embodiment of the present disclosure. As shown in FIG. 7, the above S2312 includes:
S2312-1: determining a coordinate position corresponding to each first image frame in the first video data in the map data according to the position information of the intelligent vehicle;
S2312-2: if there exist consecutive coordinate positions where the number of successfully matched map points corresponding to each of the consecutive coordinate positions is less than a matching threshold, updating the map data;
S2312- 3: if there do not exist consecutive coordinate positions where the number of successfully matched map points corresponding to each of the consecutive coordinate positions is less than a matching threshold, not updating the map data.

It should be noted that a length of a distance formed by continuous coordinate positions is greater than or equal to a preset distance.

Illustratively, the intelligent vehicle determines the coordinate position corresponding to each first image frame in the map data according to the position information of the intelligent vehicle, or the intelligent vehicle determines the coordinate position corresponding to the first image frame in the map data according to the position information in combination with a position-related operation parameter in the driving data.

According to the corresponding coordinate position of each first image frame in the map data, it is determined whether there exist consecutive coordinate positions where the number of successfully matched map points corresponding to each of the consecutive coordinate positions is less than a matching threshold, or in other words, it is determined whether there exists a distance longer than or equal to m and the number of successfully matched map points corresponding to each coordinate position within the distance is less than a matching threshold, where m is the matching threshold.

In this embodiment, the intelligent vehicle matches at least one image feature corresponding to each first image frame with map points in the map data to obtain the number of successfully matched map points, and then determines whether to update the map data according to the number of successfully matched map points, which avoids that the map data is still updated even when extracted image features and map points in the map data have a high degree of matching, that is, when the map data is highly reliable for the current environment, thereby reducing power consumption.

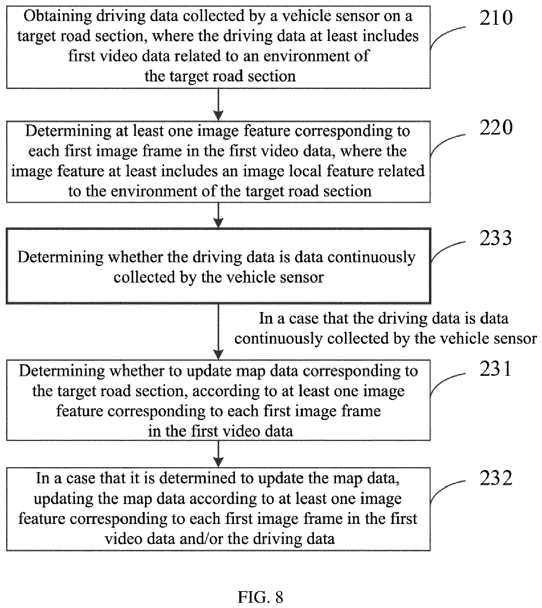

In order to ensure that the data used for map update has high data quality to make the updated map data have a high reliability, on the basis of the above embodiments, this embodiment updates the map after determining that the driving data collected by the vehicle sensor meets a requirement. Reference is made to FIG. 8.

FIG. 8 is a schematic flowchart of another map updating method provided by an embodiment of the present disclosure. As shown in FIG. 8, on the basis of the embodiment shown in FIG. 4, the method further includes:
S233: determining whether the driving data is data continuously collected by the vehicle sensor;

In a case that the driving data is data continuously collected by the vehicle sensor, S231 in any one of the above embodiments is performed: determining whether to update map data corresponding to the target road section, according to at least one image feature corresponding to each first image frame in the first video data.

Illustratively, the intelligent vehicle may determine whether an interruption longer than a preset duration exists in the driving data, in other words, whether a loss of a segment of data of a preset duration occurs, if so, the driving data is not the data continuously collected by the vehicle sensor, if not, the driving data is the data continuously collected by the vehicle sensors.

Illustratively, in a case that the driving data is the data continuously collected by the vehicle sensor, the map data corresponding to the target road section continues to be updated, for example, S231 may be performed; or S233 may be performed during the process of S231, for example, according to at least one image feature corresponding to each first image frame in the first video data, the map data corresponding to the target road section is determined to be updated, then S233 is performed.

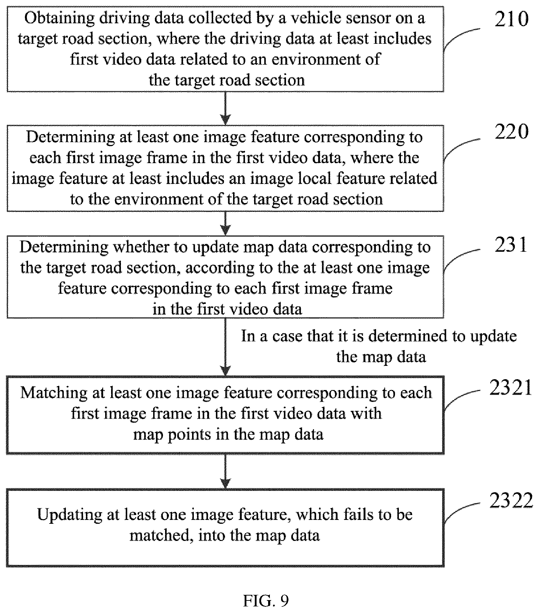

On the basis of any one of the above embodiments, FIG. 9 is a schematic flowchart of another map updating method provided by an embodiment of the present disclosure. As shown in FIG. 9, S231 in any one of the above embodiments includes:
S2321: matching at least one image feature corresponding to each first image frame in the first video data with map points in the map data;
S2322: updating at least one image feature which fails to be matched into the map data.
S2321 in this embodiment is similar to S2311 in any one of the above embodiments. The only difference is that in S2311, the number of successfully matched map points is determined by matching at least one image feature corresponding to each first image frame in the first video data with the map points in the map data, while S2321 needs to determine at least one image feature which fails to be matched through matching.

The above S2322 updates at least one image feature which fails to be matched into the map data, so as to achieve an effect of enriching the map data.

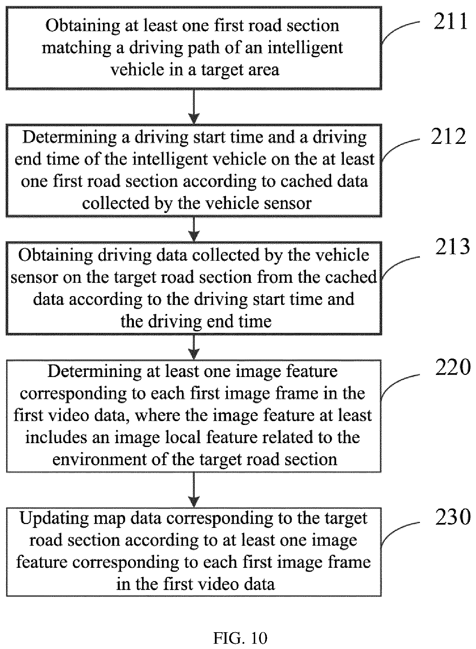

In some embodiments, the intelligent vehicle may be driven in a non-autonomous driving mode, such as a manual driving mode. It should be understood that the intelligent vehicle drives according to a preset driving route in the automatic driving mode, and therefore, it is easy to determine that the intelligent vehicle drives to a target road section for which map data has been constructed, so as to obtain the driving data of the intelligent vehicle on the target road section; however, the intelligent vehicle may follow any driving routes in the non-autonomous driving mode, so it is necessary to determine whether the intelligent vehicle drives to a road section for which map data has been constructed, and to determine which road section or sections with constructed map data the intelligent vehicle has driven to, and to determine a driving start time and a driving end time of driving to the road section with constructed map data. In this regard, an embodiment of the present application proposes an implementation as described in FIG. 10 below.

FIG. 10 is a schematic flowchart of another map updating method provided by an embodiment of the present disclosure. As shown in FIG. 10, S210 in any one of the above embodiments includes:
S211: obtaining at least one first road section matching a driving path of the intelligent vehicle in a target area;
S212: determining a driving start time and a driving end time of the intelligent vehicle on the at least one first road section according to cached data collected by the vehicle sensor;
S213: obtaining driving data collected by the vehicle sensor on the target road section from the cached data according to the driving start time and the driving end time; where the target road section is a road section that the intelligent vehicle drives through on the at least one first road section within a period of time from the driving start time to the driving end time.

It should be noted that a target area includes at least one road section for which map data has been constructed. For example, the target area may be a parking lot area, and the road section for which map data has been constructed in the parking lot area may be any road section containing a parking space.

Illustratively, when the intelligent vehicle drives to the target area, the intelligent vehicle starts to perform matching based on a driving path of its own vehicle and at least one road section for which map data has been constructed in the target area, and takes a successfully matched road section as the first road section.

Generally speaking, when the intelligent vehicle obtains at least one matched first road section, the intelligent vehicle has driven a certain distance in the first road section, and in order to retain the driving data before successful matching, the intelligent vehicle may temporarily cache the driving data within a historical preset time period, and store data collected by the vehicle sensor in a data cache pool after successful matching, where the temporarily cached data and the data in the data cache pool are the cached data collected by the vehicle sensor. Further, the intelligent vehicle may determine the driving start time and the driving end time of the intelligent vehicle on at least one first road section according to the cached data.

The intelligent vehicle may obtain the driving data collected by the vehicle sensor on the target road section from the cached data based on the driving start time and the driving end time.

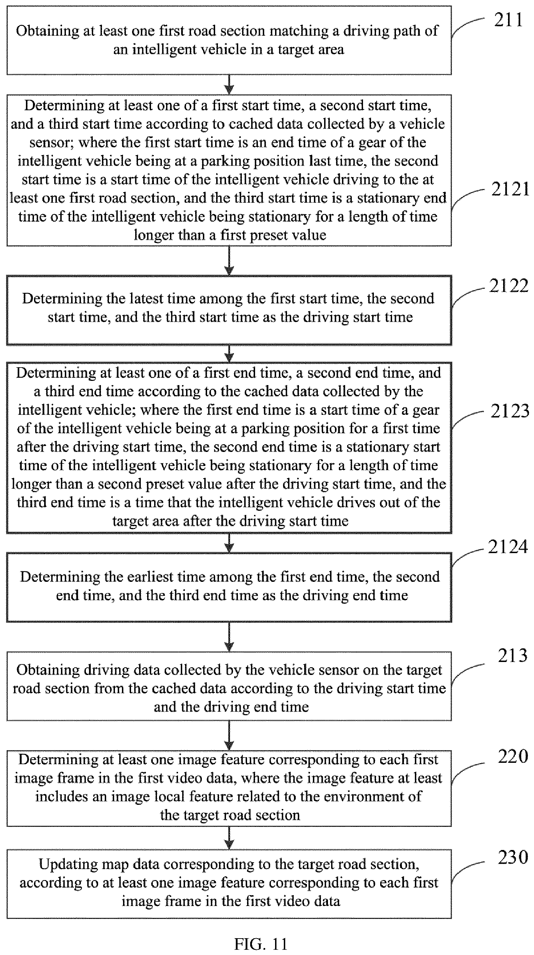

On the basis of the embodiment shown in FIG. 10, FIG. 11 is a schematic flowchart of another map updating method provided by an embodiment of the present disclosure. As shown in FIG. 11, S212 in the embodiment shown in FIG. 10 may include at least part of the following process:
S2121: determining at least one of a first start time, a second start time, and a third start time according to the cached data collected by the vehicle sensor; where the first start time is an end time of a gear of the intelligent vehicle being at a parking position last time, the second start time is a start time of the intelligent vehicle driving to the at least one first road section, and the third start time is an end time of the intelligent vehicle being stationary for a length of time longer than a first preset value;
S2122: determining a latest time among the first start time, the second start time, and the third start time as the driving start time.
S2123: determining at least one of a first end time, a second end time, and a third end time according to the cached data collected by the intelligent vehicle; where the first end time is a start time of a gear of the intelligent vehicle being at a parking position for the first time after the driving start time, the second end time is a start time of the intelligent vehicle being stationary for a length of time longer than a second preset value after the driving start time, and the third end time is a time that the intelligent vehicle drives out of the target area after the driving start time;
S2124: determining an earliest time among the first end time, the second end time, and the third end time as the driving end time.

Illustratively, the intelligent vehicle may perform fusion recursion according to at least one of wheel speed, angular velocity and acceleration in the cached data collected by the vehicle sensors to determine the second start time.

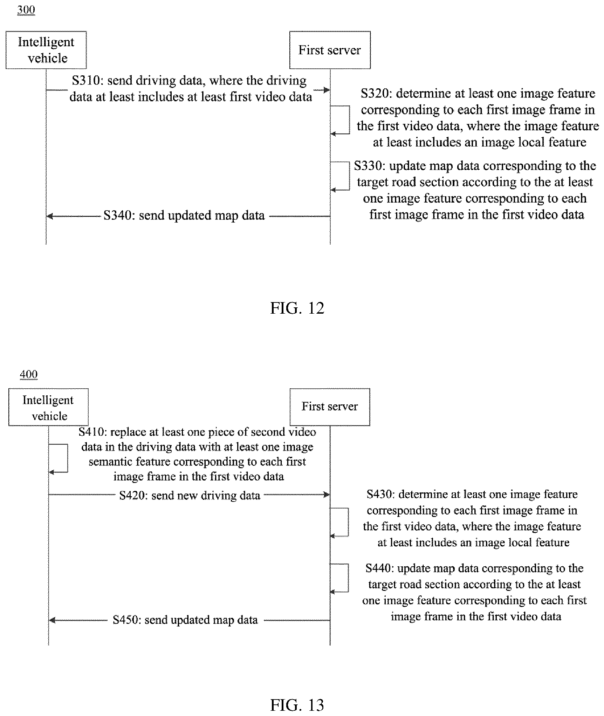

In any one of the embodiments shown in FIG. 2 to FIG. 11 above, the execution subject is the intelligent vehicles. The embodiments shown in FIG. 12 to FIG. 16 below will take the intelligent vehicle and the server as executive subjects to describe embodiments of the present disclosure.

It should be noted that the server interacting with the intelligent vehicle may be a first server, or may be a second server and a first server. Illustratively, the first server is configured to provide a cloud computing service, and the second server is configured to provide a cloud storage service, and in a solution without interaction with the second server, data may be stored by the intelligent vehicle or the first server.

In the embodiments shown in FIG. 12 to FIG. 15, the executive subject may be the above intelligent vehicle 110 and the first server, and the first server may be a server providing a computing service at the above-mentioned serving end 120.

FIG. 12 is a schematic interactive flowchart of a map updating method 300 provided by an embodiment of the present disclosure. As shown in FIG. 12, the method 300 includes:
S310: the intelligent vehicle sends the driving data to the first server, where the driving data at least includes first video data.

Correspondingly, the first server receives the driving data collected on a target road section and sent by the intelligent vehicle, where the driving data at least includes at least the first video data.

S320: the first server determines at least one image feature corresponding to each first image frame in the first video data, where the image feature at least includes an image local feature.

S330: the first server updates map data corresponding to the target road section according to the at least one image feature corresponding to each first image frame in the first video data.

S340: the first server sends updated map data to the intelligent vehicle.

Correspondingly, the intelligent vehicle receives from the server the map data updated based on the driving data.

S320 and S330 are respectively similar to S220 and S230 in the above embodiments, which are not repeated here.

FIG. 13 is a schematic interactive flowchart of a map updating method 400 provided by an embodiment of the present disclosure. As shown in FIG. 13, the method 400 includes:
S410: the intelligent vehicle replaces m pieces of second video data in the driving data with at least one image semantic feature corresponding to each first image frame in the first video data;
S420: the intelligent vehicle sends new driving data to the server, where the driving data at least includes the first video data;
S430: the first server determines at least one image feature corresponding to each first image frame in the first video data, where the image feature at least includes an image local feature;
S440: the first server updates map data corresponding to the target road section according to the at least one image feature corresponding to each first image frame in the first video data; and
S450: the first server sends updated map data to the intelligent vehicle.

Correspondingly, the intelligent vehicle obtains from the server the map data updated based on the driving data, where the second video data is video data of the front, the left or right side, or the rear of the vehicle collected by a second image sensor of the intelligent vehicle.

It should be noted that the intelligent vehicle replaces m pieces of second video data in the driving data with at least one image semantic feature corresponding to each first image frame in the first video data, so that the first server does not need to determine at least one image semantic feature based on the first video data and the second video data, which improves processing efficiency.

In some embodiments, the intelligent vehicle may replace the first video data in the driving data with at least one image local feature corresponding to each first image frame of the first video data.

Generally, the amount of data of an image local feature is large, so in order to improve transmission efficiency, the first video data may be directly sent to the first server, and the first server extracts the image local feature based on the first video data.

S420 to S450 are similar to S310 to S340, which are not repeated here.

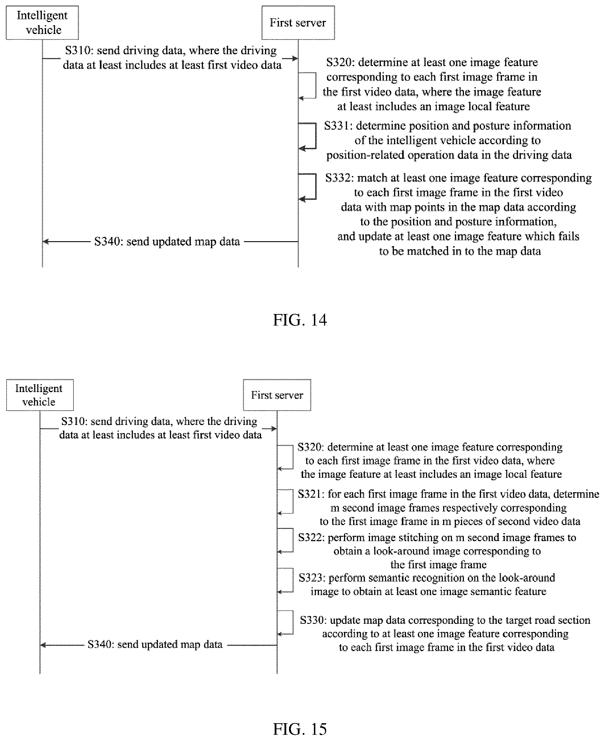

The following describes how the first server updates the map data corresponding to each first image frame in the first video data with reference to the embodiment shown in FIG. 14. This embodiment may be implemented based on the above FIG. 12 or FIG. 13, and FIG. 14 is described based on FIG. 12 only as an example.

FIG. 14 is a schematic interactive flowchart of another map updating method provided by an embodiment of the present disclosure. As shown in FIG. 14, on the basis of the embodiment shown in FIG. 12, the above S330 includes:
S331: the first server determines position and posture information of the intelligent vehicle according to position-related operation data in the driving data;
S332: the first server matches at least one image feature corresponding to each first image frame in the first video data with map points in the map data according to the position and posture information, and updates at least one image feature failing to be matched into the map data.

The above S331 and S332 are similar to S2311-1 and S2311-2 in the above embodiment, which are not repeated here.

On the basis of any one of the embodiments in FIG. 12 to FIG. 14, this embodiment requires at least one image semantic feature corresponding to each first image frame to be obtained by using the second video data.

In the process of the first server performing semantic recognition based on the m pieces of second video data and/or the first video data, m second image frames corresponding to each first image frame in the first video data respectively may be determined in the m pieces of second video data. Illustratively, when m is equal to 1, the intelligent vehicle performs semantic recognition on one second image frame to obtain at least one image semantic feature, and when m is greater than 1, the intelligent vehicle performs image stitching on the m second image frames and then performs semantic recognition on the stitched image to obtain at least one image semantic feature. For a case where m is greater than 1, an embodiment of the present application is described by taking an example shown in FIG. 15 below.

FIG. 15 is a schematic interactive flowchart of another map updating method provided by an embodiment of the present disclosure. As shown in FIG. 15, on the basis of the embodiment shown in FIG. 12, the method further includes:
S321: for each first image frame in the first video data, the first server determines m second image frames respectively corresponding to the first image frame in the m pieces of second video data;
S322: the first server performs image stitching on the m second image frames to obtain a look-around image corresponding to the first image frame;
S323: the first server performs semantic recognition on the look-around image to obtain at least one image semantic feature.

The second video data and the first video data are video data from different visual angles. For example, the first video data is collected video data of a head-up angle in front of the vehicle, and the second video data may be video data of a top view angle for the front, left or right side or rear of the vehicle.

S321 to S323 in this embodiment are similar to S241 to S243 in the above embodiments, which are not repeated here.

In some embodiments, the first server determines at least one image feature corresponding to each first image frame in the first video data, which includes: for each first image frame in the first video data, the first server performs SIFT on the first image frame to obtain at least one image local feature corresponding to the first image frame.

In some embodiments, the first video data is video data of the front of the vehicle collected by a first image sensor of the intelligent vehicle.

In some embodiments, the second video data is video data of the front, the left or right side, or the rear of the vehicle collected by a second image sensor of the intelligent vehicle.

In some embodiments, the driving data further includes at least one image semantic feature corresponding to each first image frame in the first video data.

In some embodiments, the obtaining driving data collected by the intelligent vehicle on the target road section includes: receiving the driving data sent by the intelligent vehicle; or,
reading, from a second server, the driving data uploaded by the intelligent vehicle, where the second server is configured to store map data.

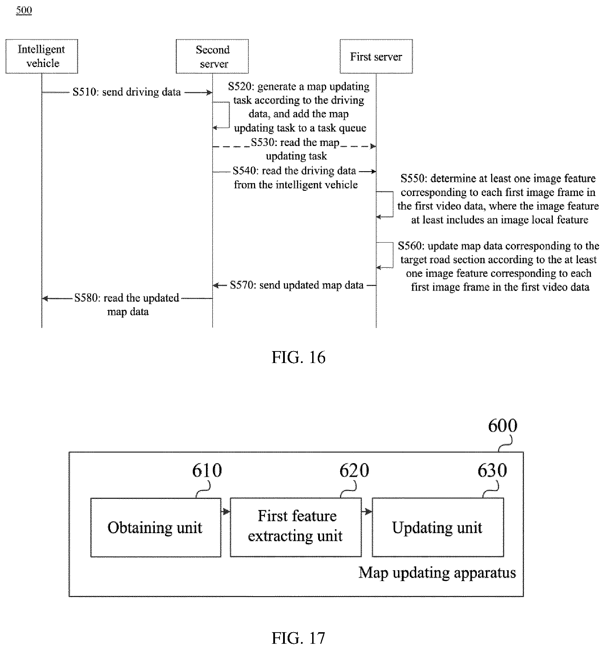

In an embodiment shown in FIG. 16, the executive subject may be the above intelligent vehicle 110, the first server and the second server, and the first server and the second server may be servers of the above serving end 120.

FIG. 16 is a schematic interactive flowchart of a map updating method 500 provided by an embodiment of the present disclosure. As shown in FIG. 16, the method 500 includes:
S510: the intelligent vehicle sends the driving data to the second server, where the driving data at least includes first video data.

Correspondingly, the second server receives the driving data collected on the target road section and sent by the intelligent vehicle, where the driving data at least includes at least the first video data.

S520: the second server generates a map updating task according to the driving data, and adds the map updating task to a task queue.

S530: the first server reads the map updating task from the task queue of the second server;

S540: read, from the second server, the driving data from the intelligent vehicle in response to the map updating task.

S550: the first server determines at least one image feature corresponding to each first image frame in the first video data, where the image feature at least includes an image local feature.

S560: the first server updates map data corresponding to the target road section according to the at least one image feature corresponding to each first image frame in the first video data.

S570: the first server sends updated map data to the second server.

S580: the intelligent vehicle reads the updated map data from the second server.

Illustratively, the first server may determine whether the task queue in the second server is empty according to a preset period, and in a case of not being empty, read the map updating task from the task queue, and read from the second server the driving data from the intelligent vehicle according to the read map updating task.

Illustratively, the first server may read n sets of corresponding driving data of the intelligent vehicle from the second server according to the read map updating task, where n≥1. It should be understood that the n sets of driving data may be the driving data uploaded to the second server after the intelligent vehicle passes through the target road section n times.

Illustratively, for each set of driving data in the n sets of driving data, the first server may update the map according to the map updating process in any one of the above embodiments.

On the basis of this embodiment, the update of map data may be implemented with relevant processes in the above embodiments. For example, before S510, the intelligent vehicle may also replace m pieces of second video data in the driving data with at least one image semantic feature corresponding to each first image frame in the first video data, and send new driving data to the second server; for another example, the first server may also perform the above processes in S331 and S332, and/or S321 to S323, which will not be repeated for the brevity of description.

Method embodiments of the present application are described in detail above with reference to FIG. 2 to FIG. 16, and apparatus embodiments of the present application are described in detail below with reference to FIG. 17 to FIG. 20. It should be understood that the apparatus embodiments and the method embodiments correspond to each other, and reference may be made to the method embodiments for similar descriptions.

FIG. 17 is a schematic block diagram of a map updating apparatus 600 provided by an embodiment of the present disclosure. As shown in FIG. 17, the map updating apparatus 600 includes:
an obtaining unit 610, configured to obtaining driving data collected by a vehicle sensor on a target road section, where the driving data at least includes first video data related to an environment of the target road section;
a first feature extracting unit 620, configured to determine at least one image feature corresponding to each first image frame in the first video data, where the image feature at least includes an image local feature related to the environment of the target road section; and
an updating unit 630, configured to update map data corresponding to the target road section according to at least one image feature corresponding to each first image frame in the first video data.

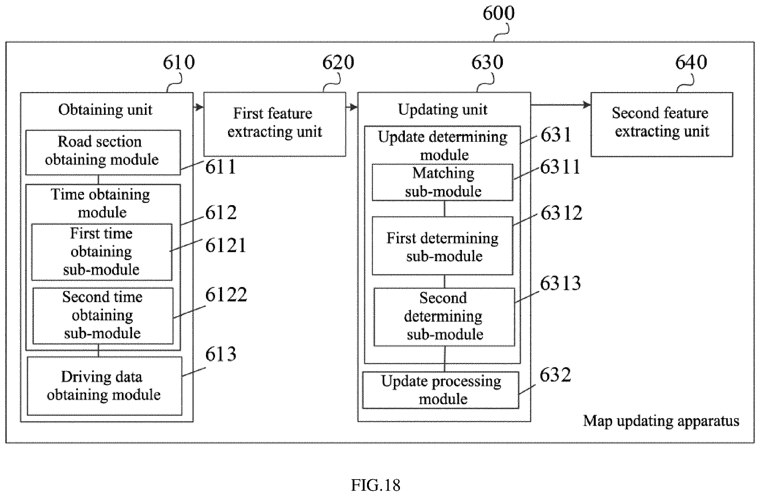

On the basis of the embodiment shown in FIG. 17, FIG. 18 is a schematic block diagram of another map updating apparatus provided by an embodiment of the present disclosure. An apparatus 600 is described below with reference to FIG. 18.

In some embodiments, the updating unit 630 includes:
an update determining module 631, configured to determine, according to the at least one image feature corresponding to each first image frame in the first video data, whether to update the map data corresponding to the target road section; and
an update processing module 632, configured to update the map data according to the at least one image feature corresponding to each first image frame in the first video data and/or the driving data in a case that it is determined to update the map data.

In some embodiments, the update determining module 631 includes: a matching sub-module 6311, configured to, for each first image frame in the first video data, match at least one image feature corresponding to the first image frame with map points in the map data to obtain the number of successfully matched map points; and a first determining sub-module 6312, configured to determine whether to update the map data according to the number of successfully matched map points corresponding to each first image frame in the first video data.

In some embodiments, the matching sub-module 6311 is specifically configured to: determine position and posture information of the intelligent vehicle corresponding to each first image frame in the first video data according to position information and position-related operation data in the driving data; and match the at least one image feature corresponding to the first image frame with the map points in the map data according to the position and pose information to obtain the number of successfully matched map points.

In some embodiments, the first determining sub-module 6312 is specifically configured to: determine a coordinate position corresponding to each first image frame in the first video data in the map data according to the position information of the intelligent vehicle; if there exist consecutive coordinate positions where the number of successfully matched map points corresponding to each of the consecutive coordinate positions is less than a matching threshold, update the map data; and if there do not exist consecutive coordinate positions where the number of successfully matched map points corresponding to each of the consecutive coordinate positions is less than a matching threshold, not update the map data; where a length of a distance formed by the continuous coordinate positions is greater than or equal to a preset distance.

In some embodiments, the apparatus 600 further includes: a second feature extracting unit 640; the second feature extracting unit 640 is configured to: for each first image frame in the first video data, determine m second image frames respectively corresponding to the first image frame in the m pieces of second video data, where m is a positive integer; and perform semantic recognition on the m second image frames to obtain at least one image semantic feature corresponding to the first image frame.

In some embodiments, the second feature extracting unit 640 is specifically configured to: perform image stitching on the first image frame and the m second image frames to obtain a look-around image corresponding to the first image frame in a case that m is greater than 1; and perform semantic recognition on the look-around image to obtain at least one image semantic feature; where the second video data and the first video data are video data from different visual angles.

In some embodiments, the first feature extracting unit 620 is specifically configured to: for each first image frame in the first video data, perform scale-invariant feature transform SIFT on the first image frame to obtain at least one image local feature corresponding to the first image frame.

In some embodiments, the first video data is video data of a front of the vehicle collected by a first image sensor of the intelligent vehicle.

In some embodiments, the second video data is video data of a front, a side, or a rear of the vehicle collected by a second image sensor of the intelligent vehicle.

In some embodiments, the operation data includes at least one of wheel speed, acceleration, angular velocity and gear position.

In some embodiments, the update determining module 631 includes: a second determining sub-module 6313; the second determining sub-module is configured to: determine whether the driving data is data continuously collected by the vehicle sensor; and in a case that the driving data is data continuously collected by the vehicle sensor, determine whether to update the map data corresponding to the target road section according to the at least one image feature corresponding to each first image frame in the first video data.

In some embodiments, the update processing module 632 is specifically configured to: send the driving data to the server; and obtain from the server the map data updated based on the driving data;
or, replace m pieces of second video data in the driving data with at least one image semantic feature corresponding to each first image frame in the first video data; obtain, from the server, the map data updated based on the driving data; where the second video data is video data of a front, a side or a rear of the vehicle collected by a second image sensor of the intelligent vehicle; or, match the at least one image feature corresponding to each first image frame in the first video data with map points in the map data; and update at least one image feature, which fails to be matched, into the map data.

In some embodiments, the obtaining unit 610 includes: a road section obtaining module 611, configured to obtain at least one first road section matching a driving path of the intelligent vehicle in a target area; and a time obtaining module 612, configured to determine a driving start time and a driving end time of the intelligent vehicle on the at least one first road section according to cached data collected by a vehicle sensor; and
a driving data obtaining module 613, configured to obtain the driving data collected by the vehicle sensor on the target road section from the cached data according to the driving start time and the driving end time; where the target road section is a road section which the intelligent vehicle drives through on the at least one first road section within a period of time from the driving start time to the driving end time.

In some embodiments, the time obtaining module 612 includes a first time obtaining sub-module 6121; the first time obtaining sub-module 6121 is configured to: determine at least one of a first start time, a second start time, or a third start time according to the cached data collected by the vehicle sensor; where the first start time is an end time of a gear of the intelligent vehicle being at a parking position last time, the second start time is a start time of the intelligent vehicle driving to the at least one first road section, and the third start time is an end time of the intelligent vehicle being stationary for a length of time longer than a first preset value; and determine a latest time among the first start time, the second start time, and the third start time as the driving start time.

In some embodiments, the time obtaining module 612 includes a second time obtaining sub-module 6122; the second time obtaining sub-module 6122 is configured to: determine at least one of a first end time, a second end time, and a third end time according to the cached data collected by the intelligent vehicle; where the first end time is a start time of a gear of the intelligent vehicle being at a parking position for a first time after the driving start time, the second end time is a start time of the intelligent vehicle being stationary for a length of time longer than a second preset value after the driving start time, and the third end time is a time that the intelligent vehicle drives out of the target area after the driving start time; and determine an earliest time among the first end time, the second end time and the third end time as the driving end time.

The apparatuses provided in the above embodiments in FIG. 17 and FIG. 18 may implement the technical solutions on the intelligent vehicle side of the above method embodiments, and the implementation principles and technical effects thereof are similar, which will not be repeated here.

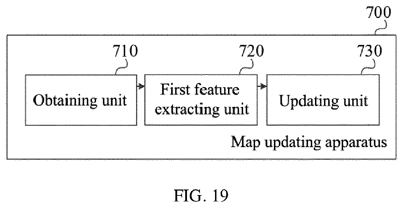

FIG. 19 is a schematic block diagram of a map updating apparatus 700 provided by an embodiment of the present disclosure. As shown in FIG. 19, the map updating apparatus 700 includes:
an obtaining unit 710, configured to obtain driving data collected by an intelligent vehicle on a target road section, where the driving data at least includes first video data;
a first feature extracting unit 720, configured to determine at least one image feature corresponding to each first image frame in the first video data, where the image feature include at least an image local feature; and
an updating unit 730, configured to update map data corresponding to the target road section according to the at least one image feature corresponding to each first image frame in the first video data.

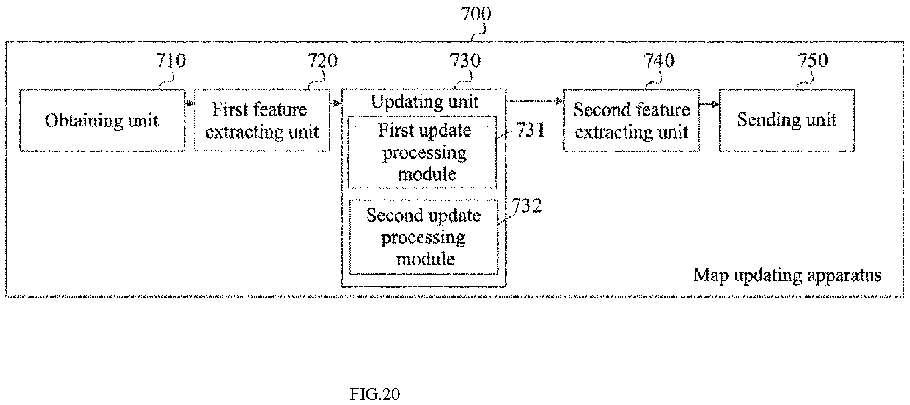

On the basis of the embodiment shown in FIG. 19, FIG. 20 is a schematic block diagram of another map updating apparatus provided by an embodiment of the present disclosure. An apparatus 700 is described below with reference to FIG. 20.

In some embodiments, the updating unit 730 includes: a first update processing module 731, configured to determine position and posture information of the intelligent vehicle corresponding to each first image frame in the first video data according to position-related operation data in the driving data; and a second update processing module 732, configured to match the at least one image feature corresponding to each first image frame in the first video data with map points in the map data according to the position and posture information, and update at least one image feature, which fails to be matched, into the map data.

In some embodiments, the apparatus 700 further includes: a second feature extracting unit 740; the second feature extracting unit 740 is configured to: for each first image frame in the first video data, determine m second image frames respectively corresponding to the first image frame in the m pieces of second video data, where m is a positive integer; and perform semantic recognition on the m second image frames to obtain at least one image semantic feature corresponding to the first image frame.

In some embodiments, the second feature extracting unit 740 is specifically configured to: perform image stitching on the first image frame and the m second image frames to obtain a look-around image corresponding to the first image frame in a case that m is greater than 1; and perform semantic recognition on the look-around image to obtain at least one image semantic feature; where the second video data and the first video data are video data from different visual angles.

In some embodiments, the first feature extracting unit 720 is specifically configured to: for each first image frame in the first video data, perform scale-invariant feature transform SIFT on the first image frame to obtain at least one image local feature corresponding to the first image frame.

In some embodiments, the first video data is video data of a front of the vehicle collected by a first image sensor of the intelligent vehicle.

In some embodiments, the second video data is video data of a front, a side or a rear of the vehicle collected by a second image sensor of the intelligent vehicle.

In some embodiments, the driving data further includes at least one image semantic feature corresponding to each first image frame in the first video data.

In some embodiments, the apparatus 700 further includes: a sending unit 750, configured to send the updated map data to the intelligent vehicle or a second server, where the second server is configured to store the map data.

In some embodiments, the obtaining unit 710 is specifically configured to: receive the driving data sent by the intelligent vehicle; or, read from the second server the driving data uploaded by the intelligent vehicle, where the second server is configured to store the map data.

In some embodiments, the obtaining unit 710 is specifically configured to: read a map updating task from a task queue of the second server; and read, from the second server, the driving data from the intelligent vehicle in response to the map updating task.

The apparatuses provided in the above embodiments of FIG. 19 and FIG. 20 may implement the technical solutions on the server side of the above method embodiments, and the implementation principles and technical effects thereof are similar, which will not be repeated here.

According to embodiments of the present disclosure, the present disclosure also provides an electronic device, a server, a readable storage medium, and a computer program product.

According to an embodiment of the present disclosure, the present disclosure also provides a computer program product including a computer program stored in a readable storage medium, and at least one processor of an electronic device may read the computer program from the readable storage medium and execute the computer program to cause the electronic device to execute solutions provided by any one of the above embodiments.

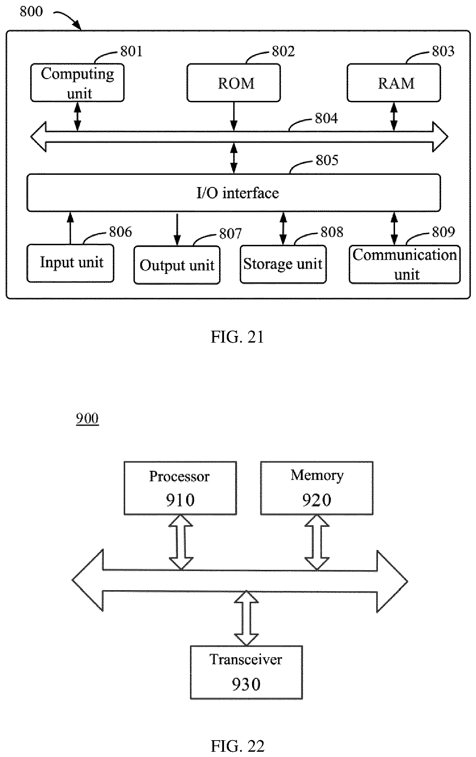

FIG. 21 shows a schematic block diagram of an example electronic device 800 which may be used to implement embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile devices, such as a personal digital assistant, a cellular phone, a smart phone, a wearable device, and other similar computing devices. The electronic device may also represent a vehicle with an autonomous driving capability, such as a smart vehicle. The components shown herein, their connections and relationships, and their functions are merely taken as examples and are not intended to limit implementations of the present disclosure described and/or claimed herein.

As shown in FIG. 21, the device 800 includes a computing unit 801, which may perform various appropriate actions and processing according to a computer program stored in a read-only memory (ROM) 802 or a computer program loaded into a random access memory (RAM) 803 from a storage unit 808. Various programs and data required for the operation of the device 800 may also be stored in the RAM 803. The computing unit 801, the ROM 802, and the RAM 803 are connected to each other through a bus 804. An input/output (I/O) interface 805 is also connected to the bus 804.

Various components in the device 800 are connected to the I/O interface 805, including: an input unit 806, such as a keyboard, a mouse, etc.; an output unit 807, such as various types of displays, speakers, etc.; a storage unit 808, such as a magnetic disk, an optical disk, etc.; and a communication unit 809, such as a network card, a modem, a wireless communication transceiver, etc. The communication unit 809 allows the device 800 to exchange information/data with other devices through a computer network, such as the Internet, and/or various telecommunication networks.

The computing unit 801 may be various general-purpose and/or special-purpose processing components with processing and computing capabilities. Some examples of the computing unit 801 include, but are not limited to, a central processing unit (CPU), a graphics processing unit (GPU), various specialized artificial intelligence (AI) computing chips, various computing units running machine learning model algorithms, a digital signal processor (DSP), and any suitable processors, controllers, microcontrollers, etc. The computing unit 801 executes the map updating method described in the above embodiments. For example, in some embodiments, the map updating method may be implemented as a computer software program which is tangibly contained in a machine-readable medium, such as a storage unit 808. In some embodiments, part or all of the computer program may be loaded and/or installed on the device 800 via the ROM 802 and/or the communication unit 809. When the computer program is loaded into the RAM 803 and executed by the computing unit 801, one or more steps of the map update method described above may be performed. Alternatively, in other embodiments, the computing unit 801 may be configured to perform the map updating method by any other suitable manners (e.g., by means of firmware).

FIG. 22 shows a schematic block diagram of an example server 900 which may be used to implement embodiments of the present disclosure. A server 900 as shown in FIG. 22 includes a processor 910, and the processor 910 may call and run a computer program from a memory to implement the method in the embodiments of the present application.

Optionally, as shown in FIG. 22, the server 900 may further include a memory 920, where the processor 910 may call and run the computer program from the memory 920 to implement the method in the embodiments of the present application.

The memory 920 may be a separate device independent of the processor 910, or may be integrated in the processor 910.

Optionally, as shown in FIG. 22, the server 900 may further include a transceiver 930, and the processor 910 may control the transceiver 930 to communicate with other devices, and specifically, may send information or data to other devices, or receive information or data sent by other devices.

The transceiver 930 may include a transmitter and a receiver. The transceiver 930 may further include one or more antennas.

Optionally, the server 900 may implement corresponding processes corresponding to the server in the methods according to the embodiments of the present application, which is not repeated here for brevity.

Various implementations of the systems and techniques described herein above may be implemented in a digital electronic circuitry, an integrated circuit system, a field programmable gate array (FPGA), an application specific integrated circuit (ASIC), an application specific standard product (ASSP), a system-on-chip system (SOC), a complex programmable logic device (CPLD), computer hardware, firmware, software, and/or combinations thereof. These various embodiments may include: implementing in one or more computer programs, which may be executed and/or interpreted on a programmable system including at least one programmable processor, where the programmable processor, which may be a special-purpose or general-purpose programmable processor, may receive data and instructions from a storage system, at least one input device and at least one output device, and transmit data and instructions to the storage system, the at least one input device and the at least one output device.

Program code for implementing the methods of the present disclosure may be written in any combination of one or more programming languages. The program code may be provided to a processor or controller of a general-purpose computer, a special-purpose computer or other programmable data processing apparatus, so that the program code, when executed by the processor or controller, causes the functions/operations specified in the flowcharts and/or block diagrams to be implemented. The program code may be executed entirely on a machine, partly on a machine, partly on a machine and partly on a remote machine as independent software packages, or entirely on a remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include, but are not limited to, an electronic, magnetic, optical, electromagnetic, infrared, or semiconductor system, apparatus, or device, or any suitable combination of the foregoing. More specific examples of the machine-readable storage medium may include, but are not limited to: an electrical connection with one or more wires, a portable computer disk, a hard disk, a random access memory (RAM), a read-only memory (ROM), an erasable programmable read only memory (EPROM or flash memory), a fiber optic, a portable compact disk read-only memory (CD-ROM), an optical storage device, a magnetic storage device, or any suitable combination of the foregoing.

In order to provide interaction with a user, the systems and techniques described herein may be implemented on a computer, which has: a display device (e.g., a CRT (cathode ray tube) or LCD (liquid crystal display) monitor) for displaying information to the user); and a keyboard and a pointing device (e.g., a mouse or trackball), through which a user may provide input to the computer. Other types of devices may also be used to provide interaction with the user; for example, the feedback provided to the user may be any form of sensory feedback (e.g., visual feedback, auditory feedback, or tactile feedback); and input from the user may be received in any form (including sound input, voice input or tactile input).

The system and technology described here may be implemented in a computing system that includes a back-end component (e.g., as a data server), or a computing system that includes a middleware component (e.g., an application server), or a computing system that includes a front-end component (e.g., a user computer with a graphical user interface or a web browser, where a user can interact with the implementation of the system and technology described here through the graphical user interface or the web browser), or a computing system that includes any combination of such back-end component, middleware component, or front-end component. The components of the system may be connected to each other through any form or medium of digital data communication (e.g., a communication network). Examples of the communication network include: a local area network (LAN), a wide area network (WAN), and the Internet.

The computer system may include a client and a server that are generally far away from each other and usually interact with each other through a communication network. The relationship between the client and the server is generated by computer programs running on corresponding computers and having a client-server relationship with each other. The server may be a cloud server, also known as a cloud computing server or a cloud host, which is a host product in the cloud computing service system to solve the defects of difficult management and weak business scalability in traditional physical host and VPS service ("Virtual Private Server", or VPS for short). The server may also be a server of a distributed system or a server combined with a blockchain.

It should be understood that the various forms of processes shown above may be used to reorder, add or delete steps. For example, the steps described in the present disclosure may be performed in parallel, sequentially, or in a different order, as long as the desired result of the technical solution disclosed in the present disclosure can be achieved, which is not limited herein.

The above embodiments do not constitute a limitation on the scope of protection of the present disclosure. Those skilled in the art should understand that various modifications, combinations, sub-combinations, and substitutions may be made according to design requirements and other factors. Any amendments, equivalent substitutions and improvements made within the principles of the present disclosure shall be included in the scope of protection of the present disclosure.

## Claims

1. A map updating method, applied to an intelligent vehicle or an electronic device connected with the intelligent vehicle, wherein the intelligent vehicle is provided with a vehicle sensor, the method comprising:
obtaining (S210) driving data collected by the vehicle sensor on a target road section, wherein the driving data at least includes first video data related to an environment of the target road section;
determining (S220) at least one image feature corresponding to each first image frame in the first video data, wherein the image feature at least includes an image local feature related to the environment of the target road section; and
updating (S230) map data corresponding to the target road section according to the at least one image feature corresponding to each first image frame in the first video data.

2. The method according to claim 1, wherein the updating (S230) the map data corresponding to the target road section according to the at least one image feature corresponding to each first image frame in the first video data comprises:
determining (S231), according to the at least one image feature corresponding to each first image frame in the first video data, whether to update the map data corresponding to the target road section; and
in a case that it is determined to update the map data, updating (S232) the map data according to the at least one image feature corresponding to each first image frame in the first video data and/or the driving data.

3. The method according to claim 2, wherein the determining (S231), according to the at least one image feature corresponding to each first image frame in the first video data, whether to update the map data corresponding to the target road section comprises:
for each first image frame in the first video data, matching (S2311) the at least one image feature corresponding to the first image frame with map points in the map data to obtain a number of successfully matched map points; and
determining (S2312), according to the number of successfully matched map points corresponding to each first image frame in the first video data, whether to update the map data.

4. The method according to claim 3, wherein the matching (S2311) the at least one image feature corresponding to the first image frame with the map points in the map data to obtain the number of successfully matched map points comprises:
determining (S2311-1), according to position information and position-related operation data in the driving data, position and posture information of the intelligent vehicle corresponding to each first image frame in the first video data, the operation data includes at least one of wheel speed, acceleration, angular velocity and gear position; and
matching (S2311-2) the at least one image feature corresponding to the first image frame with the map points in the map data according to the position and posture information to obtain the number of successfully matched map points.

5. The method according to claim 3 or 4, wherein the determining (S2312), according to the at least one image feature corresponding to each first image frame in the first video data, whether to update the map data comprises:
determining (S2312-1), according to position information of the intelligent vehicle, a coordinate position corresponding to each first image frame in the first video data in the map data;
if there exist consecutive coordinate positions where the number of successfully matched map points corresponding to each of the consecutive coordinate positions is less than a matching threshold, updating (S2312-2) the map data;
if there do not exits consecutive coordinate positions where the number of successfully matched map points corresponding to each of the consecutive coordinate positions is less than a matching threshold, not updating (S2312-3) the map data;
wherein a length of a distance formed by the continuous coordinate positions is greater than or equal to a preset distance.

6. The method according to any one of claims 1 to 4, wherein the driving data further includes m pieces of second video data, wherein m is a positive integer, and the second video data and the first video data are video data from different visual angles; the method further comprises:
for each first image frame in the first video data, determining (S241) m second image frames respectively corresponding to the first image frame in the m pieces of second video data; and
performing (S243) semantic recognition on the m second image frames to obtain at least one image semantic feature corresponding to the first image frame.

7. The method according to claim 6, wherein in a case that m is greater than 1, the performing (S243) semantic recognition on the m second image frames to obtain the at least one image semantic feature corresponding to the first image frame comprises:
performing (S242) image stitching on the m second image frames to obtain a look-around image corresponding to the first image frame; and
performing (S243) semantic recognition on the look-around image to obtain the at least one image semantic feature.

8. The method according to any one of claims 1 to 4, wherein the determining (S220) the at least one image feature corresponding to each first image frame in the first video data comprises:
for each first image frame in the first video data, performing scale-invariant feature transform SIFT on the first image frame to obtain at least one image local feature corresponding to the first image frame.

9. The method according to claim 6, wherein the first video data is video data of a front of the vehicle collected by a first image sensor of the intelligent vehicle, and the second video data is video data of a front, a side or a rear of the vehicle collected by a second image sensor of the intelligent vehicle.

10. The method according to any one of claims 2 to 4, wherein the determining (S231), according to the at least one image feature corresponding to each first image frame in the first video data, whether to update the map data corresponding to the target road section comprises:
determining (S233) whether the driving data is data continuously collected by the vehicle sensor; and
in a case that the driving data is data continuously collected by the vehicle sensor, determining (S231), according to the at least one image feature corresponding to each first image frame in the first video data, whether to update the map data corresponding to the target road section.

11. The method according to any one of claims 2 to 4, wherein the updating (S232) the map data according to the at least one image feature corresponding to each first image frame in the first video data and/or the driving data comprises:
sending the driving data to a server; and obtaining from the server the map data updated based on the driving data;
or,
replacing m pieces of second video data in the driving data with at least one image semantic feature corresponding to each first image frame in the first video data and sending new driving data to a server; and obtaining from the server map data updated based on the new driving data; wherein the second video data is video data of a front, a side or a rear of the vehicle collected by a second image sensor of the intelligent vehicle;
or,
matching (S2321) the at least one image feature corresponding to each first image frame in the first video data with map points in the map data; and updating (S2322) at least one image feature, which fails to be matched, into the map data.

12. The method according to any one of claims 1 to 4, wherein the obtaining (S210) the driving data collected by the vehicle sensor on the target road section comprises:
obtaining (S211) at least one first road section matching a driving path of the intelligent vehicle in a target area;
determining (S212) a driving start time and a driving end time of the intelligent vehicle on the at least one first road section according to cached data collected by the vehicle sensor; and
obtaining (S213) the driving data collected by the vehicle sensor on the target road section from the cached data according to the driving start time and the driving end time; wherein the target road section is a road section which the intelligent vehicle drives through on the at least one first road section within a period of time from the driving start time to the driving end time.

13. The method according to claim 12, wherein the determining (S212) the driving start time of the intelligent vehicle on the at least one first road section according to the cached data collected by the vehicle sensor comprises:
determining (S2121) at least one of a first start time, a second start time, or a third start time according to the cached data collected by the vehicle sensor; wherein the first start time is an end time of a gear of the intelligent vehicle being at a parking position last time, the second start time is a start time of the intelligent vehicle driving to the at least one first road section, and the third start time is an end time of the intelligent vehicle being stationary for a length of time longer than a first preset value; and
determining (S2122) a latest time among the first start time, the second start time, and the third start time as the driving start time; and
wherein the determining (S212) the driving end time of the intelligent vehicle on the at least one first road section according to the cached data collected by the vehicle sensor comprises:
determining (S2123) at least one of a first end time, a second end time, and a third end time according to the cached data collected by the intelligent vehicle; wherein the first end time is a start time of a gear of the intelligent vehicle being at a parking position for a first time after the driving start time, the second end time is a stationary start time of the intelligent vehicle being stationary for a length of time longer than a second preset value after the driving start time, and the third end time is a time that the intelligent vehicle drives out of the target area after the driving start time; and
determining (S2124) an earliest time among the first end time, the second end time, and the third end time as the driving end time.

14. A map updating method, applied to a first server, comprising:
obtaining driving data collected by an intelligent vehicle on a target road section, wherein the driving data at least includes first video data;
determining at least one image feature corresponding to each first image frame in the first video data, wherein the image feature at least includes an image local feature; and
updating map data corresponding to the target road section according to the at least one image feature corresponding to each first image frame in the first video data.

15. An electronic device (800), comprising:
at least one processor; and
a memory, communicatively connected with the at least one processor; wherein
the memory stores instructions executable by the at least one processor, and the instructions are executed by the at least one processor to enable the at least one processor to execute the method according to any one of claims 1 to 13.
